# EUROPEAN PATENT SPECIFICATION

(11) **EP 2 767 816 B1**
(45) Date of publication and mention of the grant of the patent: **16.11.2016**
(21) Application number: 13155615.1
(22) Date of filing: 18.02.2013
(51) Int. Cl.: G01M 13/02, G05B 23/02, F16H 57/00, F16D 66/00

(54) **Method, device, computer program and computer readable means for monitoring the wear of the syncronizers of a manual gear box**
Verfahren, Vorrichtung, Rechnerprogram und computerlesbares Aufzeichnungsmedium zur Überwachung des Verschleißes der Synchronisierungen eines manuellen Getriebes
Méthode, dispositif, programme d'ordinateur et support de stockage lisible par ordinateur de surveillance de l'usure des synchroniseurs d'une boîte de vitesses manuelle

(43) Date of publication of application: 20.08.2014
(73) Proprietor: IVECO S.p.A., 10156 Torino (IT)
(72) Inventor: Labella, Saverio, 10034 Chivasso (IT); Lomaestro, Massimo, 10045 Piossasco (IT); Varalda, Orlando, 10088 Volpiano (IT)
(74) Representative: Franzolin, Luigi

(56) References cited:
- WO-A2-2009/133161
- JP-A- H01 216 225
- JP-A- H01 216 233
- JP-A- S63 234 131

## Description

### Application field of the invention

The present invention refers to the field of vehicle diagnostic systems and more precisely to the wear of the synchronizers.

### Description of the prior art

JP H 01 - 216225 is considered as the closest prior art for claims 1, 13, 15 and 16.

In synchronized gear boxs, two shafts, a driving one and a driven one, are arranged in parallel to each other. The driving one is connected to the clutch and the driven one is connected to the gear box shaft. Pairs of gears are mounted between the two shafts, each pair defining a gear ratio. All the gear pairs are constantly in mesh with each other, but only one gear pair at a time connects the driving shaft to the driven shaft.

In particular, only one gear of the driven shaft at a time is connected radially to the driving shaft.

The driven shaft comprises also sliding sleeves, radially integral with the driven shaft and suitable to mesh also with at least a respective gear of the driven shaft, making it radially integral with the driven shaft and thus determining the activation of the respective gearbox ratio. In order to make such engaging operation possible, synchronizers are provided to carry out the function of synchronizing, by friction, the speed of rotation of the sliding sleeve with the gear to engage.

In heavy vehicles, due to the relevant masses at stake, the gearbox ratio has to be defined in relation to the type of mission in which the vehicle is intended to be used, in order to avoid the gear box to be subject to failures or to an early wear.

For example, a vehicle intended to be used for garbage collection is subject to frequent subsequent stops, travelling at very low speed.

It is evident that the synchronizers of the first gears of the gearbox are more stressed than the others.

In addition, an inappropriate use of the gearbox, such as when downshifting too fast or skipping some gearbox ratios, can worsen the situation.

### Summary of the invention

Therefore, the aim of the present invention is to provide a system for monitoring the use of the synchronizers in a manual gearbox, to detect an inappropriate use of the gearbox, a wrong mission assigned to the gearbox and, anyway, to estimate the remaining life of each synchronizer.

The object of the present invention is a method for monitoring the wear of the synchronizers of a manual gearbox in accordance with claim 1.

A device for monitoring the wear of the synchronizers of a manual gearbox is also object of the present invention. Said system can be fully integrated in a vehicle or partially integrated in it and partially integrated in an external diagnostic device.

The claims are an integral part of the present description.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:

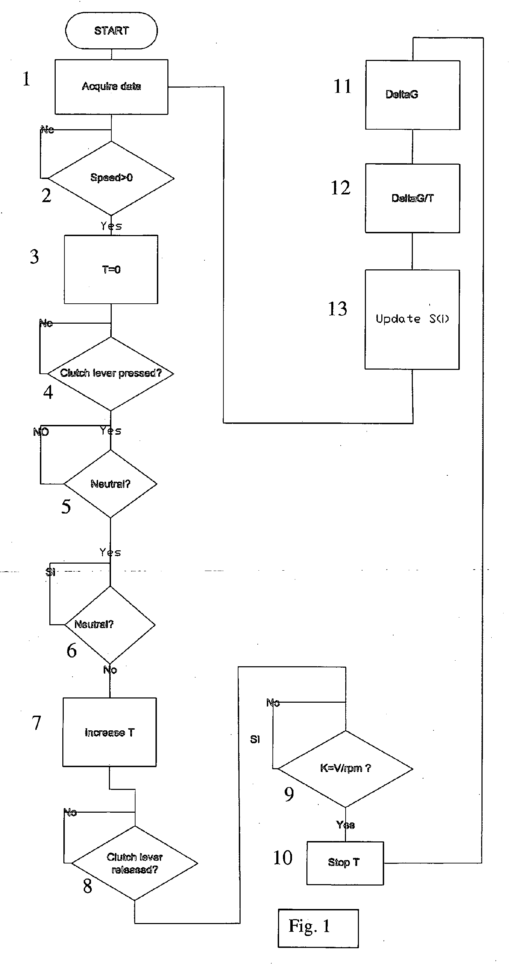

figure 1 shows an example of block diagram to realize at least a part of the present invention.

In the figures the same reference numbers and letters identify the same elements or components.

### Detailed description of preferred embodiments of the invention

The description that follows refers to the method that is object of the invention, which allows to monitor in a continuous way the wear of each synchronizer of a manual gear box.

According to a first aspect of the present invention, it is necessary to detect a quantity that is proportional to the wear of each synchronizer.

The synchronizer of a respective gear carries out its function in a time interval T identified from the moment when the gearbox is in neutral to the moment when such respective gear is engaged.

If the gearbox is appropriately equipped with sensors that are able to detect the instant wherein the neutral condition starts and the instant wherein such condition is no longer verified, then it is possible to immediately obtain the synchronization time of a synchronizer.

The engagement of a gear and/or the gear in neutral can be detected by means of sensors cooperating with the gear shift.

According to the present invention, a quantity that identifies reliably the contribution to the wear of a synchronizer for each one of its activations is represented by the ratio between the number of gears skipped during a gear shifting DeltaG and a respective synchronization time. For example, DeltaG is equal to 1 if the shifting is from the 2nd to the 3rd gear or from the 6th to the 5th gear. While DeltaG is 3 if the shifting is from the 5th to the 2nd gear, etc..

The number of skipped gears DeltaG can be immediately correlated to a difference of revolutions per minute between the starting gear already engaged and the target gear to be engaged.

Thus, it goes without saying that the higher is DeltaG, the more is the work of the synchronizer of the target gear.

If the gearbox is equipped with sensors that are able to distinguish among the engaged gears, then the calculation of DeltaG is immediate.

Most of the gearboxes, however, are not equipped with sensors that are able to detect the engaged gear. Consequently they do not allow to detect which synchronizer has been activated.

According to an aspect of the present invention, both the starting and the target gear are identified indirectly by calculating, with the vehicle running regularly after the release of the clutch, the ratio between vehicle speed and engine revolutions per minute.

The quantity deltaG(i)/T(i) of the i-th synchronizer is added to the same previously calculated quantities always relating to the i-th synchronizer. In other words, an addition is done for each synchronizer.

Each synchronizer of the gear box, thus, can be associated to the respective sum *S*(*i*) = ∑^{∞}_{*k*=1}*DeltaG*(*i*)/*T*(*i*), where k stands for the k-th shifting involving the i-th synchronizer.

Thus, a vector S of sums S(i) is obtained having a size equal to the number of synchronizers, namely to the number of gears. Such vector S contains useful information about the driving style of the driver.

The vector of the limit wear Slim can be defined when designing and/or testing the same series of gearboxs and their respective synchronizers. Such operation is usually performed on one or more prototypes of the gearbox.

Thus, according to the present invention, it is possible to continuously differentiate on each i-th synchronizer (Slim(i) - S(i) = D(i)), namely to calculate the difference between the current wear and the limit wear of each synchronizer in order to estimate its remaining life and, possibly, to notify to a maintenance person or to the driver himself/herself of the vehicle when the synchronizer is near to breaking.

According to another aspect of the present invention, the aforementioned differences D(i) are compared to each other. When a difference happens to be lower than the other differences beyond a certain margin, it means that a synchronizer is being overused with respect to the other synchronizers of the same gearbox.

Generally speaking, this indicates that such gearbox is not suitable for the mission of the respective vehicle. Thus, already in the first steps of use of the vehicle, it is possible to replace the gearbox or some of its components to make it adequate to the use of the respective vehicle.

An aspect might somehow bias the previous estimation.

It may happen, indeed, that a synchronizer is being underused not because of a wrong gearbox being assigned to the vehicle, but because the gearbox is used inappropriately.

It may happen, indeed, that a driver, out of habit, downshifts, for example, from a very high gear to a very low gear, causing DeltaG to be higher than 3 on a specific synchronizer.

This indicates that the gearbox can be subject to failures due to its inappropriate use.

According to a preferred alternative embodiment of the present invention, a vector of the frequency of the possible gear skips can be associated to each synchronizer. For example, in a five-speed gearbox, it is possible to engage the 1st gear from the 2nd, the 3rd, the 4th, the 5th gear. Thus the vector associated to the 1st gear has size four, wherein the first position identifies the frequency of the passages from the 2nd gear to the 1st one, the second position refers to the frequency of the passages from the 1st gear to the 3rs one, from the 2nd one to the 3rd one, etc..

With a weighted linear combination C(i) of such frequencies of each gearbox ratio, it is possible to obtain an index of the appropriateness of use of each i-th synchronizer.

At this point, a correlation between each value S(i) and C(i) may help discriminating an inappropriate mission from an inappropriate use of the gearbox.

For example, it is possible to obtain a new vector S' by dividing, position by position, S by C, namely S'(i) = S(i)/C(i).

Now it is possible to calculate a vector of the differences D'(i), similarly to what was described before in relation to D(i).

If the differences D' turn out to be all comparable to each other, namely if none of them is higher than the other beyond a certain margin, it means that the excessive wear of a specific synchronizer is provoked by an incorrect use of the gearbox rather than by an incorrect mission assigned to that gearbox.

This is because the driving style contained in S in considered on the vector D'.

According to a further aspect of the present invention, when the gearbox is not equipped with sensors that allow to identify the instant of engagement of a gear, but only when the gear is in neutral, then such instant is approximated to the moment wherein the driven shaft of the gearbox is certainly synchronized with the drive shaft. Namely when the ratio between vehicle speed and engine revolutions per minute is constant. Such information is directly derivable from the messages circulating on the CAN network of modern vehicles.

Most of the vehicles have a sensor which detects the gearbox in neutral. But, as soon as the gear shift starts being activated, even though no gear is engaged yet, the signal of the gear in neutral is immediately deactivated. The example of the block diagram indicated in figure 1 refers specifically to the latter described situation.

The method comprises the following steps:
(Step 1) acquisition of vehicular data, such as: vehicle speed, torque delivered by the engine, engine revolutions per minute, clutch state, neutral state of the gearbox. The clutch state consists in a switch which indicates the open clutch right from the first instants of application of pressure on the clutch pedal.
(Step 2) check/delay until the vehicle speed is higher than zero;
(Step 3) reset of the time interval value T of synchronization,
(Step 4) check/delay until the clutch pedal is pressed; (step 5) check/delay until the gear is in neutral,
(step 6) check/delay until the gear is no longer in neutral,
(step 7) increase of the synchronization time T,
(step 8) check/delay until the clutch pedal is pressed, when the clutch pedal is released
(step 9) check/delay until the ratio between vehicle speed and engine revolutions per minute (rpm) is constant,
(step 10) stop of the increase of the synchronization time T of the gearbox,
(step 11) calculation of an integer numeric value (DeltaG) equal to the number of gears skipped when engaging said current gear,
(step 12) calculation of the contribution to the wear DeltaG/T of the synchronizer relating to the current gear, (step 13) calculation of an indicative value of the overall wear (S(i)) of the synchronizer relating to the current gear, summing said value of the contribution to the wear to previously calculated values of the same synchronizer.

The present invention can be at least partially realized by means of a vehicular control unit. Possibly, the present invention can be realized by means of the cooperation of a vehicular control unit and a diagnostic tool that can be connected, or remotely connected, to the vehicular control unit.

The present invention may advantageously be realized by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details. The elements and the characteristics described in the different preferred embodiments may be combined without departing from the scope of the present application.

## Claims

1. Method for monitoring the wear of synchronizers of a manual gear box comprising a procedure for identifying an indicative value of a contribution to the wear (DeltaG/T (i)) of a i-th synchronizer, **characterized by** said procedure comprising the following steps:
- calculation of a time interval (T) of synchronization of said i-th gear,
- calculation of an integer numeric value (DeltaG) equal to the number of gears skipped when engaging such i-th gear,
- calculation of a ratio between said integer numeric value (DeltaG) and said time interval (T) of synchronization.

2. Method according to claim 1, comprising a step of identifying an indicative value of overall wear (S(i)) of the i-th synchronizer by adding a value of the contribution to the wear (delta(i)/T(i)) to previously calculated values of the same i-th synchronizer.

3. Method according to claim 2, comprising a step of calculating a value of nominal limit wear (Slim (i)) for each synchronizer and a step of estimating a remaining life of said synchronizer as a difference (D(i)) from said value of nominal limit wear and said value of overall wear (D(i) = Slim(i) - (S(i)).

4. Method according to claim 1, comprising a step of defining a vector (S) having a size equal to at least a number of synchronizers of the manual gear box, wherein each position is associated to a respective synchronizer, and to store in each i-th position said value of overall wear (S(i)) relating to the respective i-th synchronizer.

5. Method according to one of the claims from 2 to 4, comprising a step of comparing the remaining lives (D(i)) of the respective synchronizers of the same gearbox and to report a wrong gear box assigned to a vehicle when a remaining life (D(i)) of at least a synchronizer is lower beyond a predetermined threshold than the remaining lives of the remaining synchronizers.

6. Method according to one of the preceding claims, comprising a step of calculating an indicative value (C(i)) of the correct use of the i-th synchronizer as a function of the frequency of occurrence of the possible gear skips towards the i-th gear relating to said i-th synchronizer.

7. Method according to claim 6, wherein said function is a linear combination.

8. Method according to one of the claims 6 or 7, further comprising
- a step of obtaining an indicative value of theoretical overall wear (S'(i)) as a ratio between said indicative value of overall wear (S(i)) of the i-th synchronizer for a respective indicative value (C(i)) of correct usage of the i-th synchronizer and
- a step of estimating a theoretical remaining life of said synchronizer as a difference (D'(i)) between said value of limit wear and said value of theoretical overall wear (D'(i) = Slim(i) - S'(i))
- and a step of inhibiting such signalling of wrong gear box assigned to the vehicle and such signalling of a wrong use of the gearbox when no theoretical remaining life (D'(i)) is lower beyond a certain threshold than the theoretical remaining lives of the remaining synchronizers.

9. Method according to any one of the preceding claims, wherein said time interval (T) of synchronization of said i-th gear is identified from the moment wherein the gearbox is in neutral to the moment wherein a i-th gear relating to the i-th synchronizer is engaged.

10. Method according to one of the preceding claims, wherein said time interval (T) of synchronization is identified by means of sensors embedded in the gearbox and/or cooperating with the gear shift.

11. Method according to one of the preceding claims from 1 to 9, wherein said time interval is derived from the deactivation of the neutral signal at the moment of the stabilization, after the release of the clutch, of the gear ratio, namely when the ratio between vehicle speed and engine revolutions per minute is constant.

12. Method according to claim 11, comprising the following steps:
(Step 1) acquisition of vehicular data, such as: vehicle speed, torque delivered by the engine, engine revolutions per minute, clutch state, neutral state of the gearbox;
(Step 2) check/delay until the vehicle speed is higher than zero;
(Step 3) reset of the time interval value T of synchronization,
(Step 4) check/delay until the clutch pedal is pressed;
(step 5) check/delay until the gear is in neutral,
(step 6) check/delay until the gear is no longer in neutral,
(step 7) increase of the synchronization time T,
(step 8) check/delay until the clutch pedal is pressed, when the clutch pedal is released
(step 9) check/delay until the ratio between vehicle speed and engine revolutions per minute (rpm) is constant.
(step 10) stop of the increase of the synchronization time T of the gearbox,
(step 11) calculation of an integer numeric value (DeltaG) equal to the number of gears skipped when engaging said current gear,
(step 12) calculation of the contribution to the wear DeltaG/T of the synchronizer relating to the current gear, (step 13) calculation of an indicative value of the overall wear (S(i)) of the synchronizer relating to the current gear, summing said value of the contribution to the wear to previously calculated values of the same synchronizer.

13. Device for monitoring the wear of synchronizers in a manual gear box comprising first means of calculating an indicative value of a contribution to the wear (DeltaG/T (i)) of a i-th synchronizer, **characterized by** said first means comprising:
- second means for calculating a time interval (T) of synchronization of said i-th gear,
- third means of calculation of an integer numeric value (DeltaG) equal to the number of gears skipped when engaging such i-th gear,
- fourth means of calculation of a ratio between said integer numeric value (DeltaG) and said time interval (T) of synchronization.

14. Device according to claim 13, wherein said first processing means are configured to perform all the steps of any one of the claims from 2 to 12.

15. Computer program comprising program code means suitable for performing all the steps of any claim from 1 to 12, when such program is run on a computer.

16. Computer-readable means comprising a recorded program, said computer-readable means comprising program code means suitable for performing all the steps according to claims from 1 to 12, when said program is run on a computer.

17. Ground vehicle **characterized in that** it is equipped with the device for monitoring the wear of the synchronizers of the transmission, in accordance with claim 13.

## Patentansprüche

1. Verfahren zur Überwachung der Abnutzung der Synchronisiereinrichtungen eines Handschaltgetriebes, umfassend einen Vorgang der Identifizierung eines Anzeigewerts eines Abnutzungsbeitrags (DeltaG/T (i)) einer i-ten Synchronisiereinrichtung, welches Verfahren durch die folgenden Schritte gekennzeichnet ist:
- Berechnung eines Zeitintervalls (T) der Synchronisierung eines i-ten Zahnrads,
- Berechnung eines ganzzahligen numerischen Werts (DeltaG) gleich der Anzahl übersprungener Zahnräder, wenn in dieses i-te Zahnrad eingegriffen wird,
- Berechnung eines Verhältnisses zwischen dem ganzzahligen numerischen Wert (DeltaG) und dem Zeitintervall (T) der Synchronisierung.

2. Verfahren gemäß Anspruch 1, umfassend einen Schritt der Identifizierung eines Anzeigewerts der Gesamtabnutzung (S(i)) der i-ten Synchronisiereinrichtung durch Addieren eines Werts des Abnutzungsbeitrags (Delta(i)/T(i)) zu vorher berechneten Werten der gleichen i-ten Synchronisiereinrichtung.

3. Verfahren gemäß Anspruch 2, umfassend einen Schritt der Berechnung eines Werts einer nominalen Grenzabnutzung (Slim(i)) für jede Synchronisiereinrichtung und einen Schritt der Schätzung einer verbleibenden Lebensdauer der Synchronisiereinrichtung als Differenz (D(i)) des Werts der nominalen Grenzabnutzung und des Werts der Gesamtabnutzung (D(i) = Slim(i) - (S(i)).

4. Verfahren gemäß Anspruch 1, umfassend einen Schritt der Definition eines Vektors (S) mit einer Größe zumindest gleich einer Anzahl von Synchronisiereinrichtungen in dem Handschaltgetriebe, wobei jede Position mit einer jeweiligen Synchronisiereinrichtung assoziiert ist, und Speicherung in jeder i-ten Position des Werts der Gesamtabnutzung (S(i)) bezüglich der jeweiligen i-ten Synchronisiereinrichtung.

5. Verfahren gemäß einem der Ansprüche 2 bis 4, umfassend einen Schritt des Vergleichs der verbleibenden Lebensdauer (D(i)) die jeweiligen Synchronisiereinrichtungen des gleichen Getriebes und der Anzeige, das einem Fahrzeug ein falsches Schaltgetriebe zugeordnet ist, wenn eine verbleibende Lebensdauer (D(i)) von zumindest einer Synchronisiereinrichtung niedriger jenseits einer vorbestimmten Schwelle liegt als die übrigen Lebensdauern der verbleibenden Synchronisiereinrichtungen.

6. Verfahren gemäß einem der vorhergehenden Ansprüche, umfassend einen Schritt der Berechnung eines Anzeigewerts (C(i)) der korrekten Verwendung der i-ten Synchronisiereinrichtung als eine Funktion der Frequenz des Auftretens der möglichen Zahnradsprünge in Richtung des i-ten Zahnrads bezüglich der i-ten Synchronisiereinrichtung.

7. Verfahren gemäß Anspruch 6, bei welchem die Funktion eine Linearkombination ist.

8. Verfahren gemäß einem der Ansprüche 6 oder 7, ferner umfassend:
- einen Schritt der Ermittlung eines Anzeigewerts einer theoretischen Gesamtabnutzung (S'(i)) als ein Verhältnis zwischen dem Anzeigewert der Gesamtabnutzung (S(i) der i-ten Synchronisiereinrichtung für einen jeweiligen Anzeigewert (C(i)) der korrekten Benutzung der i-ten Synchronisiereinrichtung und
- einen Schritt der Schätzung einer theoretischen Restlebensdauer der Synchronisiereinrichtung als eine Differenz (D'(i)) zwischen dem Wert der Grenzabnutzung und dem Wert der theoretischen Gesamtabnutzung (D'(i) = Slim(i) - S'(i))
- und einen Schritt der Hemmung der Anzeige einer falschen Benutzung des Getriebes, wenn keine theoretische Restlebensdauer (D'(i)) niedriger jenseits einer vorbestimmten Schwelle ist als die theoretischen Restlebensdauern der übrigen Synchronisieeinrichtungen.

9. Verfahren gemäß einem der vorhergehenden Ansprüche, bei welchem das Zeitintervall (T) der Synchronisierung des i-ten Zahnrads von dem Moment an identifiziert wird, in welchem das Getriebe sich im Leerlauf befindet, bis zu dem Moment, in welchem ein i-tes Zahnrad bezüglich der i-ten Synchronisiereinrichtung im Eingriff steht.

10. Verfahren gemäß einem der vorhergehenden Ansprüche, bei welchem das Zeitintervall (T) der Synchronisierung mittels Sensoren ermittelt wird, die in das Schaltgetriebe eingebaut sind und/oder mit dem Schaltgetriebe zusammenwirken.

11. Verfahren gemäß einem der vorhergehenden Ansprüche 1 bis 9, bei welchem das Zeitintervall aus der Deaktivierung des Leerlaufsignals im Moment der Stabilisierung des Übersetzungsverhältnisses nach dem Lösen der Kupplung abgeleitet wird, nämlich wenn das Verhältnis zwischen Fahrzeuggeschwindigkeit und Motorumdrehungen pro Minute konstant ist.

12. Verfahren gemäß Anspruch 11, umfassend die folgenden Schritte:
(Schritt 1) Ermittlung von Fahrzeugdaten, wie etwa:
Fahrzeuggeschwindigkeit, vom Motor geliefertes Drehmoment, Motorumdrehungen pro Minute, Kupplungszustand, Leerlaufzustand des Getriebes;
(Schritt 2) Prüfung/Verzögerung, bis die Fahrzeuggeschwindigkeit größer ist als Null;
(Schritt 3) Zurücksetzen des Zeitintervallwerts T der Synchronisation,
(Schritt 4) Prüfung/Verzögerung, bis das Kupplungspedal gedrückt ist;
(Schritt 5) Prüfung/Verzögerung, bis das Getriebe sich im Leerlauf befindet,
(Schritt 6) Prüfung/Verzögerung, bis das Getriebe sich nicht länger im Leerlauf befindet,
(Schritt 7) Vergrößerung der Synchronisationszeit (T),
(Schritt 8) Prüfung/Verzögerung, bis das Kupplungspedal gedrückt wird, wenn das Kupplungspedal gelöst ist,
(Schritt 9) Prüfung/Verzögerung, bis das Verhältnis zwischen Fahrzeug, Geschwindigkeit und Motorumdrehung pro Minute (rpm) konstant ist,
(Schritt 10) Anhalten der Vergrößerung der Synchronisationszeit (T) des Getriebes,
(Schritt 11) Berechnung eines ganzzahligen numerischen Werts (DeltaG) gleich der Anzahl von übersprungenen Zahnrädern, wenn in das aktuelle Zahnrad eingegriffen wird,
(Schritt 12) Berechnung des Beitrags der Abnutzung (DeltaG/T) der Synchronisiereinrichtung bezüglich des aktuellen Zahnrads,
(Schritt 13) Berechnung eines Anzeigewerts der Gesamtabnutzung (S(i)) der Synchronisiereinrichtung bezüglich des aktuellen Zahnrads, Summieren des Werts des Beitrags zu der Abnutzung zu den vorhergehend berechneten Werten der gleichen Synchronisiereinrichtung.

13. Verfahren zur Überwachung der Abnutzung von Synchronisiereinrichtungen in einem Handschaltgetriebe, umfassend erste Mittel zur Berechnung eines Anzeigewerts eines Abnutzungsbeitrags (DeltaG/T(i)) einer i-ten Synchronisiereinrichtung, **dadurch gekennzeichnet, dass** die ersten Mittel umfassen:
- zweite Mittel zur Berechnung eines Zeitintervalls (T) der Synchronisation eines i-ten Zahnrads,
- dritte Mittel zur Berechnung eines ganzzahligen numerischen Werts (DeltaG) gleich der Anzahl von übersprungenen Zahnrädern beim Eingriff in dieses i-te Zahnrad,
- vierte Mittel zur Berechnung eines Verhältnisses zwischen dem ganzzahligen numerischen Wert (DeltaG) und dem Zeitintervall (T) der Synchronisierung.

14. Vorrichtung gemäß Anspruch 13, bei welcher die ersten Verarbeitungsmittel dazu vorgesehen sind, alle Schritte aus einem der Ansprüche 2 bis 12 durchzuführen.

15. Computerprogramm, umfassend Programmcodemittel geeignet zur Durchführung aller Schritte aus einem der Ansprüche 1 bis 12, wenn dieses Programm auf einem Computer ausgeführt wird.

16. Computerlesbare Mittel, umfassend ein gespeichertes Programm, welche computerlesbaren Mittel Programmcodemittel umfassen, die geeignet sind zur Durchführung aller Schritte gemäß einem der Ansprüche 1 bis 12, wenn dieses Programm auf einem Computer ausgeführt wird.

17. Bodenfahrzeug, **dadurch gekennzeichnet, dass** es mit der Vorrichtung zur Überwachung der Abnutzung der Synchronisiereinrichtungen des Getriebes gemäß Anspruch 13 ausgestattet ist.

## Revendications

1. Procédé destiné à contrôler l'usure de synchroniseurs d'une boîte de vitesses manuelle comprenant une procédure pour identifier une valeur d'indication d'une contribution à l'usure (DeltaG/T (i)) d'un i^{ème} synchroniseur, **caractérisé en ce que** ladite procédure comprend les étapes suivantes :
- le calcul d'un intervalle de temps (T) de synchronisation dudit i^{ème} engrenage,
- le calcul d'une valeur numérique entière (DeltaG) égale au nombre d'engrenages sautés lors de l'entrée en prise dudit i^{ème} engrenage,
- le calcul d'un rapport entre ladite valeur numérique entière (DeltaG) et ledit intervalle de temps (T) de synchronisation.

2. Procédé selon la revendication 1, comprenant une étape d'identification d'une valeur d'indication d'usure générale (S(i)) de l'i^{ème} synchroniseur en ajoutant une valeur de la contribution à l'usure (delta(i)/T(i)) à des valeurs préalablement calculées du même i^{ème} synchroniseur.

3. Procédé selon la revendication 2, comprenant une étape de calcul d'une valeur d'usure limite nominale (Slim (i)) pour chaque synchroniseur et une étape d'estimation d'une durée de vie restante dudit synchroniseur en tant que différence (D(i)) entre ladite valeur d'usure limite nominale et ladite valeur d'usure générale (D(i) = Slim(i) - (S(i)).

4. Procédé selon la revendication 1, comprenant une étape de définition d'un vecteur (S) ayant une taille égale à au moins un nombre de synchroniseurs de la boîte de vitesses manuelle, dans lequel chaque position est associée à un synchroniseur respectif, et pour stocker dans chaque i^{ème} position ladite valeur d'usure générale (S(i)) se rapportant au i^{ème} synchroniseur respectif.

5. Procédé selon l'une des revendications 2 à 4, comprenant une étape de comparaison des durées de vie restantes (D(i)) des synchroniseurs respectifs de la même boîte de vitesses et pour rapporter une mauvaise boîte de vitesses attribuée à un véhicule quand une durée de vie restante (D(i)) d'au moins un synchroniseur est inférieure au-delà d'un seuil prédéterminé aux durées de vite restantes des synchroniseurs restants.

6. Procédé selon l'une des revendications précédentes, comprenant une étape de calcul d'une valeur d'indication (C(i)) de l'utilisation correcte du i^{ème} synchroniseur en fonction de la fréquence d'occurrence des possibles sauts d'engrenage vers le i^{ème} engrenage se rapportant audit i^{ème} synchroniseur.

7. Procédé selon la revendication 6, dans lequel ladite fonction est une combinaison linéaire.

8. Procédé selon l'une des revendications 6 ou 7, comprenant en outre
- une étape d'obtention d'une valeur d'indication d'usure générale théorique (S'(i)) en tant que rapport entre ladite valeur d'indication d'usure générale (Si)) du i^{ème} synchroniseur pour une valeur d'indication respective (C(i)) d'usage correct du i^{ème} synchroniseur et
- une étape d'estimation d'une durée de vie restante théorique dudit synchroniseur en tant que différence (D'(i)) entre ladite valeur d'usure limite et ladite valeur d'usure générale théorique (D'(i) = Slim(i) - S'(i))
- et une étape d'interdiction d'une telle signalisation de mauvaise boîte de vitesses attribuée au véhicule et d'une telle signalisation d'une mauvaise utilisation de la boîte de vitesses quand aucune durée de vie restante théorique (D'(i)) n'est inférieure au-delà d'un certain seuil aux durées de vie restantes théoriques des synchroniseurs restants.

9. Procédé selon l'une des revendications précédentes, dans lequel ledit intervalle de temps (T) de synchronisation dudit i^{ème} engrenage est identifié à partir du moment où la boîte de vitesses est au neutre jusqu'au moment où un i^{ème} engrenage se rapportant au i^{ème} synchroniseur est en prise.

10. Procédé selon l'une des revendications précédentes, dans lequel ledit intervalle de temps (T) de synchronisation est identifié au moyen de capteurs incorporés dans la boîte de vitesses et/ou coopérant avec le changement de vitesse.

11. Procédé selon l'une des revendications précédentes de 1 à 9, dans lequel ledit intervalle de temps est dérivé de la désactivation du signal neutre au moment de la stabilisation, après le relâchement de l'embrayage, du rapport de vitesse, à savoir quand le rapport entre la vitesse de véhicule et les tours de moteur par minute est constant.

12. Procédé selon la revendication 11, comprenant les étapes suivantes :
(Etape 1) acquisition de données de véhicule, telles que : vitesse de véhicule, couple délivré par le moteur, tours par minute du moteur, état d'embrayage, état neutre de la boîte de vitesses ;
(Etape 2) vérification/retard jusqu'à ce que la vitesse du véhicule est supérieure à zéro ;
(Etape 3) réinitialisation de la valeur d'intervalle de temps T de synchronisation ;
(Etape 4) vérification/retard jusqu'à ce que la pédale d'embrayage soit pressée ;
(Etape 5) vérification/retard jusqu'à ce que l'engrenage soit au neutre ;
(Etape 6) vérification/retard jusqu'à ce que l'engrenage ne soit plus au neutre ;
(Etape 7) augmentation du temps de synchronisation T ;
(Etape 8) vérification/retard jusqu'à ce que la pédale d'embrayage soit pressée, quand la pédale d'embrayage est relâchée ;
(Etape 9) vérification/retard jusqu'à ce que le rapport entre la vitesse du véhicule et les tours par minute (tr/min) du moteur soit constant ;
(Etape 10) arrêt de l'augmentation du temps de synchronisation T de la boîte de vitesses ;
(Etape 11) calcul de la valeur numérique entière (DeltaG) égale au nombre d'engrenages sautés lors de la mise en prise dudit engrenage en cours ;
(Etape 12) calcul de la contribution à l'usure DeltaG/T du synchroniseur se rapportant à l'engrenage en cours ;
(Etape 13) calcul d'une valeur d'indication de l'usure générale (S(i)) du synchroniseur se rapportant à l'engrenage en cours, ajoutant ladite valeur de la contribution à l'usure à des valeurs préalablement calculées du même synchroniseur.

13. Dispositif destiné à contrôler l'usure de synchroniseurs dans une boîte de vitesses manuelle comprenant un premier moyen de calcul d'une valeur d'indication d'une contribution à l'usure (DeltaG/T (i)) d'un i^{ème} synchroniseur, **caractérisé en ce que** ledit premier moyen comprend :
- un deuxième moyen destiné à calculer un intervalle de temps (T) de synchronisation dudit i^{ème} engrenage,
- un troisième moyen de calcul d'une valeur numérique entière (DeltaG) égale au nombre d'engrenages sautés lors de la mise en prise d'un tel i^{ème} engrenage,
- un quatrième moyen de calcul d'un rapport entre ladite valeur numérique entière (DeltaG) et ledit intervalle de temps (T) de synchronisation.

14. Dispositif selon la revendication 13, dans lequel ledit premier moyen de traitement est configuré pour effectuer toutes les étapes selon l'une quelconque des revendications de 2 à 12.

15. Programme informatique comprenant un moyen de code de programme approprié pour effectuer toutes les étapes selon l'une quelconque des revendications 1 à 12, lorsqu'un tel programme est exécuté sur un ordinateur.

16. Moyen lisible sur ordinateur comprenant un programme enregistré, ledit moyen lisible sur ordinateur comprenant un moyen de code de programme approprié pour effectuer toutes les étapes selon les revendications 1 à 12, quand ledit programme est exécuté sur un ordinateur.

17. Véhicule terrestre **caractérisé en ce qu'**il est équipé du dispositif destiné à contrôler l'usure des synchroniseurs de la transmission, conformément à la revendication 13.
